# EUROPEAN PATENT APPLICATION

(11) **EP 4 559 858 A1**
(43) Date of publication of application: **28.05.2025**
(21) Application number: 23211813.3
(22) Date of filing: 23.11.2023
(51) Int. Cl.: B66C 23/78, F16C 17/02, F16C 25/04, F16C 35/02

(54) **A DEVICE FOR SUPPORTING A LEG OF A LIFTING ASSEMBLY**

(71) Applicant: Skyrex AB, 405 19 Göteborg (SE)
(72) Inventor: ROOS, Mikael, 72213 VÄSTERÅS (SE); THORSELL, Maria, 749 45 Enköping (SE)

(57) **Abstract**

The present invention relates to a device 1 for supporting a leg 27 of a lifting assembly. The device 1 comprises a bottom part 3 having an upper side including a curved surface 5 and a bottom side adapted for resting on the ground, and a top part 7 having an upper side including a support surface 9 for supporting the leg 27 and a bottom side having at least one curved surface 11 mating with the curved surface 5 of the bottom part 3. The top part 7 is adjustable with respect to the bottom part 3 about an axis of rotation R while the curved surface 11 of top part 7 is sliding on the curved surface 5 of the bottom part 3 so that the support surface 9 becomes horizontal. The shape of the curved surface 5 of the bottom part 3, in a cross-section perpendicular to said axis of rotation R, is uniform along the axis of rotation R.

## Description

### Technical field

The present invention relates to a device for supporting a leg of a lifting assembly, such as a crane. More particularly, the the present invention relates to a device for supporting a leg of a lifting assembly for elevating components to a wind turbine tower.

### Background

Wind turbine towers today require regular maintenance of its main components, such as rotor blades, gear boxes and generators. However, these components are often large and heavy, which poses an issue during both the assembly and the maintenance of the wind turbine towers.

EP3812337A1 discloses a lifting assembly for elevating components to a wind turbine tower comprising a base frame resting on the ground, a support tower extending upward from the base frame, a crane for lifting components is arranged in a top part of the support tower and securing assemblies for securing the support tower to the wind turbine tower. The base frame comprises two pair of support legs resting on the ground. At least the two front legs must be located close to the wind turbine tower so that the securing assemblies can reach the wind turbine tower.

The ground around the wind turbine tower is not always level, which makes it difficult to locate the legs so that the support tower of the lifting assembly becomes vertical. For example, the wind turbine tower is sometimes located on a dome shaped base part, and thus the ground slopes away from the wind turbine tower.

EP2050709B1 discloses a bracing device for machines, in particular mobile cranes, having at least one outrigger which can be arranged on the machine and a support element, wherein the outrigger is movably mounted via a bearing means on the support element and the bearing means has a joint socket arranged on the support element. The outrigger extends into the joint socket of the support element and has a ring-shaped face via which the outrigger is braced directly in the joint socket. The face has a shape which is convex at least in parts, preferably in the shape of a rounded part-spherical surface. The bearing element has a surface shape which at least in parts is spherical. To brace the machine, load is transmitted from the outrigger via the convex region of the face and a corresponding surface of the joint socket directly to the support element.

DE8618061 discloses a device for supporting vehicles, such as vehicle cranes, turntable ladders, lifting platforms, concrete pumps or the like, in a stationary working position. The device comprises a support piston provided with a dome-shaped head and a foot attached thereto, which is held in an angularly variable manner on the support piston via a releasably connected coupling element which engages in an annular groove there.

A problem with the disclosed supporting devices is that they are not suitable for supporting legs of heavy cranes, such as lifting assemblies for elevating components to a wind turbine tower. A lifting assembly for elevating components to a wind turbine tower having four support legs, may exerts a pressure on each support leg corresponding to a weight of about 5 - 6 ton. This means that the support devices need to be large. If the prior art support devices are exposed to such high loads, they may become instable and can begin to wobble. Further, the support devices disclosed in the above-mentioned prior art are expensive to manufacture in a large scale.

### Summary

The aim of the present invention is to overcome at least one of the above problems, and to provide an improved device for supporting and levelling the legs of a lifting assembly when the ground is sloping.

This aim is achieved by a device for supporting a leg of a lifting assembly as defined in claim 1.

The device comprises a bottom part having an upper side including a curved surface and a bottom side for resting on the ground, and a top part having an upper side including a support surface for supporting the leg, and a bottom side having at least one curved surface mating with the curved surface of the bottom part. The top part is bearing on the bottom part and the top part is adjustable with respect to the bottom part about an axis of rotation while the curved surface of top partis is sliding on the curved surface of the bottom part, and the shape of the curved surface of the bottom part, in a cross-section perpendicular to the axis of rotation, is uniform along the axis of rotation.

The top part and the bottom part form a cradle and the top part is rotatable with respect to the bottom part about an axis of rotation while the curved surface of the top part is sliding on the curved surface of the bottom part. Since the top part is adjustable with respect to the bottom part about an axis of rotation, it is possible to adjust the angle of the support surface with respect to the horizontal plane so that the support surface always is horizontal independent of the slope of the ground around the wind turbine tower. Since the shape of the curved surface of the bottom part, in a cross-section perpendicular to the axis of rotation, is uniform along the axis of rotation, the curved surface of the bottom part is not spherical as in the prior art. Further, the at least one curved surface of the top part, mating with the curved surface of the top part, is not spherical. The top part is movable with respect to the bottom part about an axis of rotation defined by the radius of the curved surfaces. This means that the top part is only allowed to be adjusted with respect to the bottom part about one single axis of rotation. Thus, the top part becomes stable during the adjustment of the angle of the support surface. Further, the top part is stable with respect to the bottom part when the support surface is horizontal, and the leg is resting on the support surface. Thus, wobbling of the top part is avoided.

In one aspect of the invention, the support surface is flat and defines a plane in parallel with the axis of rotation. This means that the axis of rotation never intersects the plane defined by the support surface. Thus, the support surface is rotatable with respect the axis of rotation. The fact that the support surface is flat facilitates for the support leg to bear on the support surface.

The curved surface of the bottom part has a radius, and the radius of the at least one curved surface of the top part corresponds to the radius of the curved surface of the bottom part. The radius of the curved surfaces defines the axis of rotation.

In one aspect of the invention, the radius of the curved surfaces of the bottom part and the top part is largerthan 0.3 m, and preferably largerthan 0.5 m. The radius depends on the size of the leg. The larger leg, the larger device is needed and accordingly a larger radius is needed.

For example, the radius of the curved surfaces is between 0.3 m and 2 m. Preferably the radius of the curved surfaces is between 0.5 m and 1.5 m.

In an embodiment of the invention, the curved surface of the bottom part has a concave shape and the at least one curved surface of the top part has a convex shape. This is advantageous from a manufacturing perspective.

In one aspect of the invention, the bottom side of the top part is provided with a plurality of spaced apart protruding elements, each protruding element having a curved surface mating with the curved surface of the bottom part. The top part is adjustable with respect to the bottom part about the axis of rotation while the protruding elements are sliding on the curved surface of the bottom part. Each of the protruding elements has the same radius as the curved surface of the bottom part. For example, the top part comprises a base part having an upper side defining the support surface, and the protruding elements are protruding from the base part at a distance from each other. Preferably, the number of protruding elements is at least three. By having a plurality of spaced apart protruding elements, the weight of the top part can be significantly reduced compared to a solid top part having a single bottom surface. A larger distance between the protruding elements, further reduces the need of material of the top part and accordingly reduces the cost of the top part.

In one aspect of the invention, the upper side of the bottom part is provided with a recess defining the curved surface, and the protruding elements are adapted to fit in the recess. The shape of the recess, in a cross-section perpendicular to the axis of rotation, is uniform along the direction of the axis of rotation. The curved surfaces of the protruding elements are allowed to slide on the curved surface of the bottom part until the support surface is horizontally directed. Thus, the position of the top part is adjustable relative to the bottom part, and by that it is possible to adjust the angle of the support surface so that it always is horizontal independent of the slope of the ground around the wind turbine tower.

In one aspect of the invention, the bottom side of the bottom part is provided with at least two elongated and spaced apart foot plates for resting on the ground.

In one aspect of the invention, the undersides of each of the foot plates are provided with a friction material having a friction coefficient more than 0.2, and preferably more than 0.3. The foot plates are provided with a high friction material to increase the friction between the foot plates and the ground.

In one aspect of the invention, the foot plates are arranged so that the angle between the longitudinal axes of the foot plates is adjustable in a plane defined by the longitudinal axes (of the foot plates. Thus, the angle between the foot plates can be adjusted and the foot plates can be angled relative each other to compensate for a curved shape of the ground, for example, a conically shaped base part of a wind turbine tower.

In one aspect of the invention, the foot plates are arranged rotatable about their longitudinal axis. Thus, it is possible for the foots to adapt to a curved shape of the ground, such as a dome shaped base part of a wind turbine tower.

In one aspect of the invention, each of the foot plates is arranged so that its longitudinal axis and the axis of rotation are scew lines. This means that the axis of rotation and the longitudinal axes of the foot plates are located in different planes, i.e., they are not coplanar, they do not intersect and are not parallel. Thus, the foot plates can be disposed with their longitudinal axes in the direction of the sloping ground at the same time as the support surface is adjustable about an axis perpendicular to the direction of the sloping ground to compensate for the slope.

In one aspect of the invention, the top part and the bottom part are made of steel. Thus, the top part and the bottom part can stand the high pressure from the leg resting on the support surface.

In one aspect of the invention, the length of the bottom part is between 0.8 m and 1.5 m.

In one aspect of the invention, the bottom part comprises a curved plate defining the curved surface, and an at least partly hollow body. Thus, the weight of the bottom part can be significantly reduced compared to a solid bottom part.

### Brief description of the drawings

The invention will now be explained more closely by the description of different embodiments of the invention and with reference to the appended figures.
Fig. 1 shows an example of a device according to the invention.
Figs. 2a-c show an example of a bottom part in different views.
Figs. 3a-b show an example of a top part in a perspective view from above and a perspective view from below.
Figs. 4a-b show an example of foot plates from a top view and a bottom view.
Fig. 5 shows the device in figure 1 supporting a leg of a lifting assembly.
Fig. 6 shows the device in a rear view.
Fig. 7 shows the device with the foot plates angled in a top view.

### Detailed description

Aspects of the present disclosure will be described more fully hereinafter with reference to the accompanying drawings. The device can, however, be realized in many different forms and should not be construed as being limited to the aspects set forth herein. Like numbers in the drawings refer to like elements throughout.

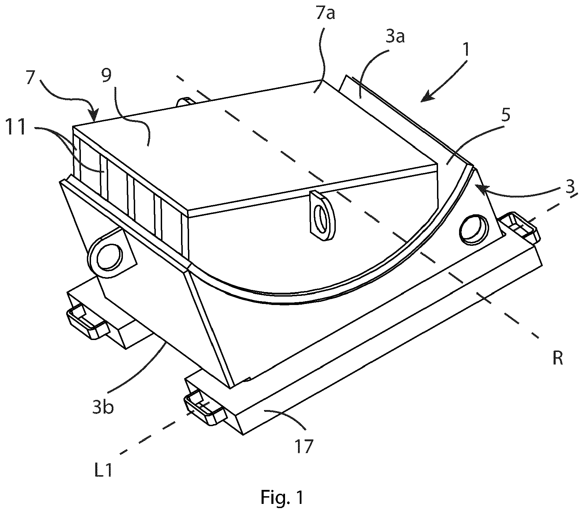

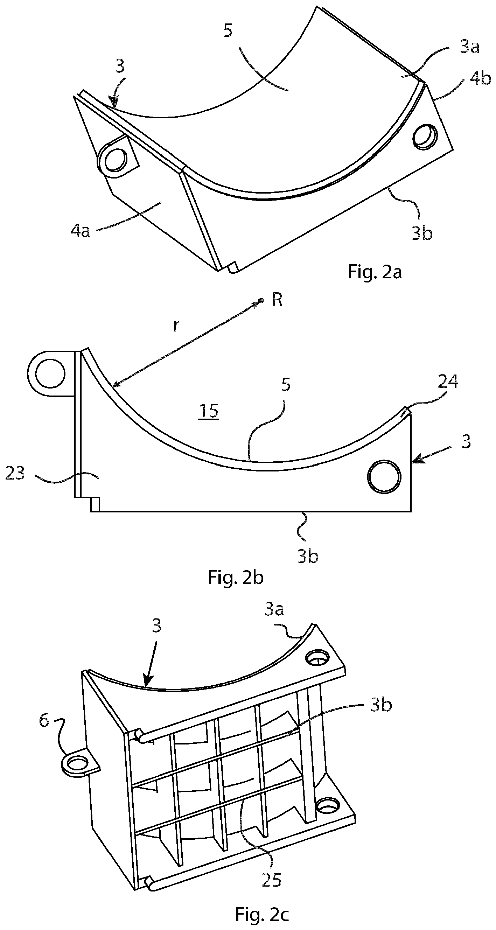

Figure 1 shows an example of a device 1 for supporting a leg of a lifting assembly according to the invention. The device 1 comprises a bottom part 3 and a top part 7. An example of the bottom part 3 is shown in figures 2a-c. Figure 2a shows the bottom part 3 in a perspective view from above. Figure 2b shows the bottom part 3 in a side view. Figure 2c shows the bottom part 3 in a perspective view from below. The bottom part 3 has an upper side 3a including a curved surface 5 and a bottom side 3b for resting on the ground.

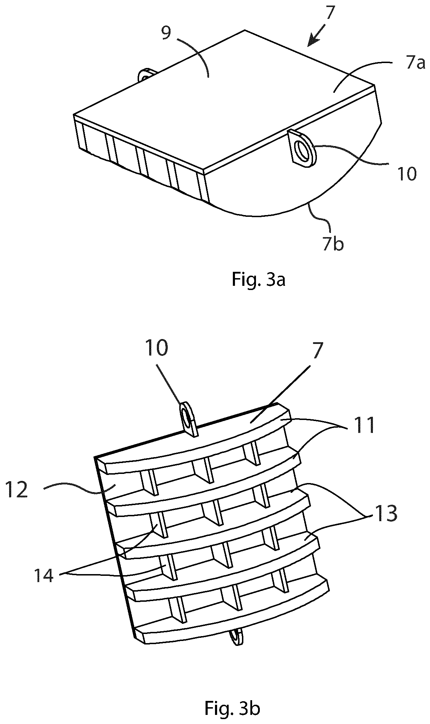

An example of the top part 7 is shown in figures 3a-b. Figure 3a shows the top part 7 in a perspective view from above. Figure 3b shows the top part 7 in a perspective view from below. The top part 7 has an upper side 7a including a support surface 9 for supporting the leg, and a bottom side 7b having at least one curved surface 11 mating with the curved surface 5 of the bottom part 3. The top part 7 is resting on the curved surface 5 of the bottom part. The top part 7 and the bottom part 3 form a cradle. The top part 7 is movable with respect to the bottom part 3 about an axis of rotation R while sliding on the curved surface 5 of the bottom part 3, as shown in figure 1. The support surface 9 is flat and defines a plane in parallel with the axis of rotation R. In one example, the axis of rotation R and the support surface 9 are coplanar. However, it is also possible that the axis of rotation R is located a distance from the support surface 9. In the illustrated example, the axis of rotation R is located a distance above the support surface 9. The angle of support surface 9 is adjustable with respect to the horizontal plane by rotating the top part 7. Thus, the support surface 9 can be adjusted so that so that support surface 9 becomes horizontal.

The top part 7 is adjustable with respect to the bottom part 3 about the axis of rotation R while the at least one curved surface 11 of the top part 7 is sliding on the curved surface 5 of the bottom part 3. The shape of the curved surface 5 of the bottom part 3, in a cross-section perpendicular to the axis of rotation R, is uniform along the axis of rotation R. The curved surface 5 of the bottom part 3 has a radius r, and the radius of the at least one curved surface 11 of the top part has the same the radius as the curved surface 5 of the bottom part. The radius r of the curved surfaces 5, 11 defines the axis of rotation R, as shown in figure 2b. The radius of the curved surfaces 5, 11 is, for example, between 0.5 m and 1.5 m. However, the radius r can be less than 0.5, or larger than 1.5 in dependence on the size of the leg and the weight of the lifting assembly which the device supports.

In the illustrated example, the curved surface 5 of the bottom part 3 has a concave shape and the curved surface 11 of top part 7 has a corresponding convex shape. However, in another example, the curved surface 5 of the bottom part 3 may have a convex shape, and the at least one curved surface 11 of the top part 7 may have a concave shape. In this example, the shape of the curved surface 5 of the bottom part 3 is a curved rectangle, as shown in figure 2a.

In one aspect of the invention, the curved surface 5 of the bottom part 3 is shaped as the envelope surface of a cylinder, which is cut along the longitudinal direction of the cylinder, and the axis of rotation R is the symmetry axis of the cylinder. For example, the curved surface 5 of the bottom part is shaped as a cut cylindrical surface.

Preferably, the top part 7 and the bottom part 3 are made of steel. Thus, the top part and the bottom part can stand the high pressure from the support leg. Alternatively, the top part and the bottom part can be made of another metal, such as aluminium or titan. The top part and the bottom part can also be made of a reinforced polymer.

In the illustrated example, the bottom side 7b of the top part 7 comprises a plurality of spaced apart protruding elements 13, as shown in figure 3b. Each of the protruding elements 13 has a curved surface 11 mating with the curved surface 5 of the bottom part 3. The protruding elements 13 are sliding on the curved surface 5 of the bottom part 3 when the top part is rotating about the axis of rotation R. In this example, the top part 7 comprises five spaced protruding elements 13. However, the number of protruding elements 13 may vary and can be more or less than five. The top part may comprise a base part 12 having an upper side defining the support surface 9 and the protruding elements 13 are protruding from the base part 12. The top part 7 may further comprise support elements 14 arranged between the protruding elements 13 for supporting the protruding elements 13 and to increase the strength of the top part. This example reduces the material needed in the top part and by that reduces the weight of the top part 7. In an alternative embodiment, the top part 7 can be solid and have only one curved surface 11.

The top part and the bottom part can optionally be provided with a plurality of lifting eyes 6, 10 to facilitate the transportation and positioning of the device 1.

The upper side 3a of the bottom part 3 is provided with a recess 15 defining the curved surface 5, as shown in figure 2b. The protruding elements 13 of the top part 7 are adapted to fit in the recess 15, as shown in figure 1. The shape of the recess 15, in a cross-section perpendicular to the axis of rotation R, is uniform along the direction of the axis of rotation R.

In the illustrated example, the bottom part 3 comprises a partly hollow body 23 and a curved plate 24 defining said curved surface 5, as shown in figure 2b and 2c. The body 23 comprises walls and a lattice 25 arranged between the walls to increase the strength of the bottom part. This example reduces the material needed in the bottom part 3 and by that reduces the weight of the bottom part. In an alternative embodiment, the bottom part 3 can be solid. The length of the bottom part 3 is, for example, between 0.8 m and 2 m.

In the illustrated example, a rear end 4a of the bottom part 3 is higher than a front end 4b of the bottom part 3 to compensate for the slope of the ground, as shown in figure 2a and 2b.

In the illustrated example, the bottom side 3b of the bottom part is provided with two spaced apart foot plates 17 for resting on the ground, as shown in figure 1. The foot plates 17 are elongated and have longitudinal axes L1, L2. In the illustrated example, the axis of rotation R is perpendicular to the longitudinal axes L1, L2 of the foot plates.

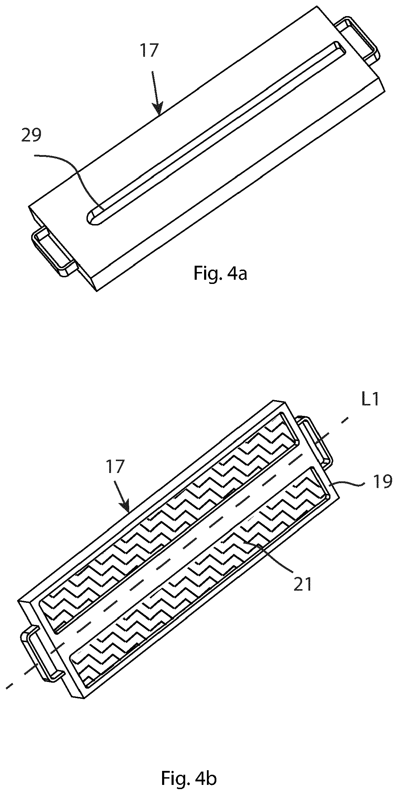

Figure 4a shows an example of a foot plate 17 in a view from above. Figure 4b shows the foot plate 17 in a view from below. The underside 19 of the foot plate 17 is provided with a friction material 21 having a friction coefficient more than 0.2, and preferably more than 0.3. For example, the friction material is rubber. However, it is also possible to use other types of material having high friction, such as wood or a polymer. In this example, the upper side of the foot plate is provided with an elongated groove 29 for engagement with an elongated part 30 on the bottom side 3b of the bottom part 3, shown in figure 2c.

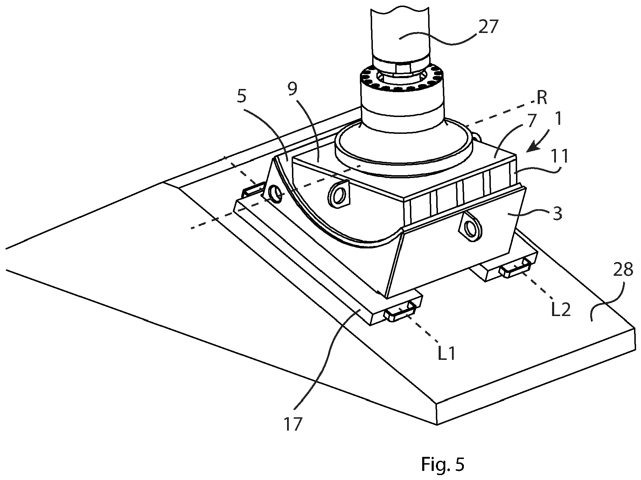

Figure 5 shows the device 1 supporting a leg 27 of a lifting assembly on a flat sloping surface 28. The foot plates 17 are resting on the sloping surface 28. In this example, the foot plates 17 are arranged in parallel, and the foot plates 17 are located with their longitudinal axes L1, L2 in the direction of the slope of the surface 28. In this example, the top part 7 and the bottom part 3 are arranged so that the axis of rotation R is perpendicular to the longitudinal axes L1, L2 of the foot plates 17. The one or more curved surfaces 11 of the top part 7 are slidably bearing on the curved surface 5 of the bottom part 3. The top part 7 is arranged rotatable with respect to the bottom part 3 while the one or more curved surfaces 11 are allowed to slide on the curved surface 5 of the bottom part. In the figure 5, the top part 7 has been adjusted with respect to the bottom part 3 so that the support surface 9 is horizontal. The leg 27 is resting on the support surface 9 of the top part 7. Preferably, the top part 7 is adjusted so that the support surface 9 is horizontal before the leg 27 is placed on the support surface 9. Due to the high pressure exerted by the leg 27 on the support surface 9, the top part 7 stays in place on the bottom part 3. The device 1 can compensate for a slope between 0° and 30°.

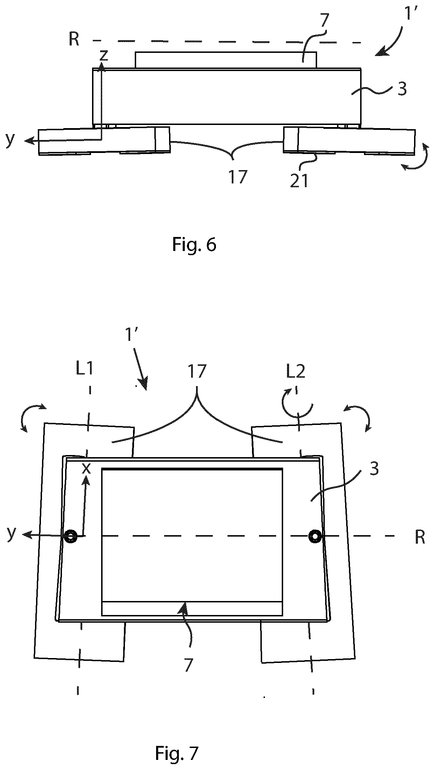

Figures 6 and 7 shown another example of a device 1' for supporting a leg of a lifting assembly. The only difference between this device 1' and the device 1 shown in figure 1 is that the foot plates 17 are arranged movable with respect to the bottom part 3. The longitudinal axis L1, L2 defines an x-axis, the width of the foot plates defined a y-axis perpendicular to the x-axis, and a z-axis is perpendicular to the x-axis and y-axis, as shown in figure 6 and 7. The longitudinal axes L1, L2 of the foot plates defines a plane. In this example, the foot plates 17 are arranged so that the angle between the longitudinal axes L1, L2 of the foot plates is adjustable in the plane defined by the longitudinal axes L1, L2 of the foot plates. This means that each of the foot plates 17 is rotatable about the axis z perpendicular to the width of the foot plates and perpendicular to the longitudinal axis of the foot plate. Thus, the angle between the foot plates can be adjusted to compensate for a curved shape of the ground, for example, a conical shaped base part of a wind turbine tower. Further, the foot plates 17 can be arranged rotatable about their longitudinal axis L1, L2, i.e. about the x-axis, to further compensate for a curved shape of the ground, for example, a dome shaped base part of a wind turbine tower.

Preferably, each of the foot plates 17 is arranged so that its longitudinal axis L1, L2 and the axis of rotation R are scew lines. This means that the axis of rotation R and the longitudinal axes L1, L2 of the foot plates are located in different planes, i.e., they are not coplanar, they do not intersect and are not parallel. Thus, the foot plates 17 can be disposed with their longitudinal axes in the direction of the sloping ground at the same time as the support surface is adjustable about an axis perpendicular to the direction of the sloping ground to compensate for the slope.

The present invention is not limited to the embodiments disclosed but may be varied and modified within the scope of the following claims. For example, the top part and the bottom par can be made as solid parts. Further, the number of protruding elements having curved surfaces of the top part may vary. Although the device is suitable for supporting a leg of a lifting assembly, it can also be used for supporting legs of other types of large machines.

### Reference list

1, 1'. support device
3. bottom part
3a. upper side of the bottom part
3b. bottom side of the bottom part
4a. rear end of the bottom part
4b. front end of the bottom part
5. curved surface of the bottom part
6. lifting eye of the bottom part
7. top part
7a. upper side of the top part
7b. bottom side of the top part
9. support surface
10. lifting eye of the top part
11. curved surface of the top part
12. base part of the top part
13. protruding elements
14. support elements
15. recess
17. foot plates
19. Underside of the foot plate
21. friction material
23. body of the bottom part
24. curved plate of the bottom part
25. lattice of the body (strengthen grid)
27 leg
28 flat sloping surface
29. groove of the foot plate
30. elongated part of the bottom part

R - axis of rotation
r - radius
L1, L2 - longitudinal axes of the foot plates

## Claims

1. A device (1) for supporting a leg (27) of a lifting assembly, wherein the device comprises:
- a bottom part (3) having an upper side (3a) including a curved surface (5) and a bottom side (3b) for resting on the ground, and
- a top part (7) having an upper side (7a) including a support surface (9) for supporting the leg (27), and a bottom side (7b) having at least one curved surface (11) mating with the curved surface (5) of the bottom part (3), and the top part is bearing on the bottom part, **characterized in that** the top part (7) is adjustable with respect to the bottom part (3) about an axis of rotation (R) while the curved surface (11) of top part (7) is sliding on the curved surface (5) of the bottom part (3), and the shape of the curved surface (5) of the bottom part (3), in a cross-section perpendicular to said axis of rotation (R), is uniform along the axis of rotation (R).

2. The device according to claim 1, wherein said support surface (9) is flat and defines a plane in parallel with the axis of rotation (R).

3. The device according to claim 1 or 2, wherein said curved surface (5) of the bottom part (3) has a concave shape and said at least one curved surface (11) of the top part (7) has a convex shape.

4. The device according to any of the previous claims, wherein the bottom side (7b) of the top part (7) comprises a plurality of spaced apart protruding elements (13), which each has a curved surface (11) mating with the curved surface (5) of the bottom part (3), and the top part (7) is adjustable with respect to the bottom part (3) about said axis of rotation (R) while the protruding elements (13) are sliding on the curved surface (5) of the bottom part (3).

5. The device according to claim 4, wherein the upper side (3a) of the bottom part (3) is provided with a recess (15) defining said curved surface (5) and said protruding elements (13) are adapted to fit in the recess (15).

6. The device according to any of the previous claims, wherein the shape of the curved surface (5) of the bottom part (3) is a curved rectangle.

7. The device according to any of the previous claims, wherein the bottom side (3b) of the bottom part (3) is provided with at least two elongated and spaced apart foot plates (17) for resting on the ground.

8. The device according to claim 7, wherein the underside (19) of each of the foot plates (17) is provided with a friction material (21) having a friction coefficient more than 0.2, and preferably more than 0.3.

9. The device according to claim 7 or 8, wherein said foot plates (17) are arranged so that the angle between the longitudinal axes of the foot plates (17) is adjustable in a plane defined by the longitudinal axes (L1, L2) of the foot plates.

10. The device according to any of the claims 7 - 9, wherein said foot plates (17) are arranged rotatable about their longitudinal axis (L).

11. The device according to any of the claims 7 - 10, wherein each of the foot plates (17) is arranged so that its longitudinal axis (I) and the axis of rotation (R) are scew lines.

12. The device according to any of the previous claims, wherein the curved surface of the bottom part has a radius, and the at least one curved surface of the top part has a radius corresponds to the radius of the curved surface of the bottom part, and the radius (r) of the curved surfaces (5, 11) of the bottom part (3) and the top part (7) is larger than 0.3 m, and preferably larger than 0.5 m

13. The device according to any of the previous claims, wherein the top part (7) and the bottom part (3) are made of steel.

14. The device according to any of the previous claims, wherein the bottom part (3) comprises a curved plate (25) defining said curved surface (5), and an at least partly hollow body (23).
